# EUROPEAN PATENT SPECIFICATION

(11) **EP 0 276 326 B1**
(45) Date of publication and mention of the grant of the patent: **07.09.1994**
(21) Application number: 87904951.8
(22) Date of filing: 29.07.1987
(51) Int. Cl.: G11B 7/00, G11B 11/10

(54) **OPTICAL DISC RECORDING/REPRODUCING APPARATUS**
AUFZEICHNUNGS/WIEDERGABEGERÄT FÜR OPTISCHE PLATTE
APPAREIL D'ENREGISTREMENT/REPRODUCTION A DISQUE OPTIQUE

(30) Priority: 31.07.1986 JP 180925/86; 13.08.1986 JP 190274/86
(43) Date of publication of application: 03.08.1988
(73) Proprietor: SONY CORPORATION, Tokyo 141 (JP)
(72) Inventor: OGAWA, Hiroshi, Shinagawa-ku Tokyo 141 (JP)
(74) Representative: Thomas, Christopher Hugo
(86) International application number: PCT/JP87/00556
(87) International publication number: WO 88/01092

(56) References cited:
- EP-A- 0 107 754
- EP-A- 0 145 279
- EP-A- 0 164 745
- EP-A- 0 169 579
- EP-A- 0 202 914
- JP-A- 6 122 450
- JP-A-57 181 429
- JP-A-58 143 333
- JP-A-61 190 742
- JP-A-62 119 743
- PATENT ABSTRACTS OF JAPAN, vol. 5, no. 64 (P-59)[736], 30th April 1981, page 152 P 59; & JP-A-56 16 950 (MITSUBISHI DENKI K.K.) 18-02-1981
- PATENT ABSTRACTS OF JAPAN, vol. 7, no. 274 (P-241)[1419], 7th December 1983; & JP-A-53 153 239 (NIPPON DENKI K.K.) 12-09-1983
- PATENT ABSTRACTS OF JAPAN, vol. 10, no. 110 (P-450)[2167], 24th April 1986;& JP-A-60 239 929 (MATSUSHITA DENKI SANGYO K.K.) 28-11-1985

## Description

This invention relates to optical disc recording and reproducing apparatus.

An opto-magnetic disc is known as a large capacity recording medium permitting data re-writing. The data writing, reading and erasure are usually performed using a laser beam emitted by a laser diode. Heretofore, at the time of data writing or erasure, the laser diode has generally remained energized during periods other than the periods during which the laser beam irradiation is actually required, with the result that the life of the laser diode is short.

The tracks on the opto-magnetic disc are each divided into a plurality of sectors, each of which has a gap region for absorbing temporary errors. The data are recorded in units synchronized with each sector. Because of the gap regions, the effective recording capacity is reduced.

European patent specification EP-A2-0 164 745 discloses optical disc recording and reproducing apparatus having provision for recording and erasing data, any such erasure being done sector-by-sector, while Japanese patent specification JP-A-57/181429 discloses disc recording and reproducing apparatus having features similar to those of the pre-characterizing part of claim 1.

According to the present invention there is provided an optical disc recording and reproducing apparatus comprising:
a disc drive means for rotating an optical disc at a constant angular velocity;
said disc including pit regions having servo pits and data regions in which data will be recorded, said pit and data regions being alternately provided along the circumferential direction of said disc; an optical head including a laser diode for emitting laser light irradiating said disc;
synchronizing means for controlling reading and writing, said synchronizing means comprising pulse generating means for forming reference clock pulses synchronized with said servo pits in said disc, said pulse generating means being connected to said optical head and responsive to an output therefrom obtained by detecting said servo pits; and
means for supplying drive pulses to said laser diode in synchronism with said reference clock pulses, whereby said laser diode is driven to write data onto said data regions in synchronism with said reference clock pulses;
characterized in that:
said synchronizing means further controls erasing;
said means for supplying drive pulses to said laser diode further drives said laser diode to erase data from said data regions in synchronism with said reference clock pulses;
said means for supplying drive pulses includes means causing a relatively small current to flow through said laser diode during the intervals between said drive pulses effecting data erasure or data writing; and
data are recorded in said data regions by drive pulses synchronized with said reference clock pulses at the rate of one bit of data per pulse, with data being erased from said data regions on a bit-by-bit basis.

Viewed from a second aspect this invention provides an optical disc recording and reproducing apparatus comprising:
a disc drive means for rotating an optical disc at a constant angular velocity;
said disc including pit regions having servo pits and data regions in which data will be recorded, said pit and data regions being alternately provided along the circumferential direction of said disc;
an optical head including a laser diode for emitting laser light irradiating said disc;
synchronizing means for controlling reading and writing, said synchronizing means comprising pulse generating means for forming reference clock pulses synchronized with said servo pits in said disc, said pulse generating means being connected to said optical head and responsive to an output therefrom obtained by detecting said servo pits; and
means for supplying drive pulses to said laser diode in synchronism with said reference clock pulses, whereby said laser diode is driven by drive pulses of a first pulse width to write data onto said data regions in synchronism with said reference clock pulses;
characterized in that:
said synchronizing means further controls erasing;
said means for supplying drive pulses to said laser diode further drives said laser diode with drive pulses of a second pulse width to erase data from said data regions in synchronism with said reference clock pulses, said second pulse width being greater than said first pulse width; and
data are recorded in said data regions by said drive pulses of said first pulse width synchronised with said reference clock pulses at the rate of one bit of data per pulse, with data being erased from said data regions on a bit-by-bit basis.

The invention will now be described by way of example with reference to the accompanying drawings, throughout which like parts are referred to by like references, and in which:
Figure 1 shows recording patterns on an opto-magnetic disc employed in an embodiment of the present invention;
Figure 2 shows part of a track on the disc;
Figure 3 shows a pit region;
Figure 4 shows the arrangement of pits existing along the radial direction of the disc;
Figure 5 is a block diagram of an embodiment of opto-magnetic disc apparatus according to the present invention;
Figure 6 is a circuit diagram of a laser drive circuit for the embodiment;
Figure 7 is a timing chart for the laser drive circuit of Figure 6;
Figure 8 is a circuit diagram of another laser drive circuit for the embodiment;
Figure 9 is a timing chart for the laser drive circuit of Figure 8;
Figure 10 is a block diagram of a modified embodiment of opt-magnetic disc apparatus according to the present invention;
Figure 11 is a circuit diagram of a laser drive circuit for the modified embodiment; and
Figure 12 is a timing chart for the laser drive circuit of Figure 11.

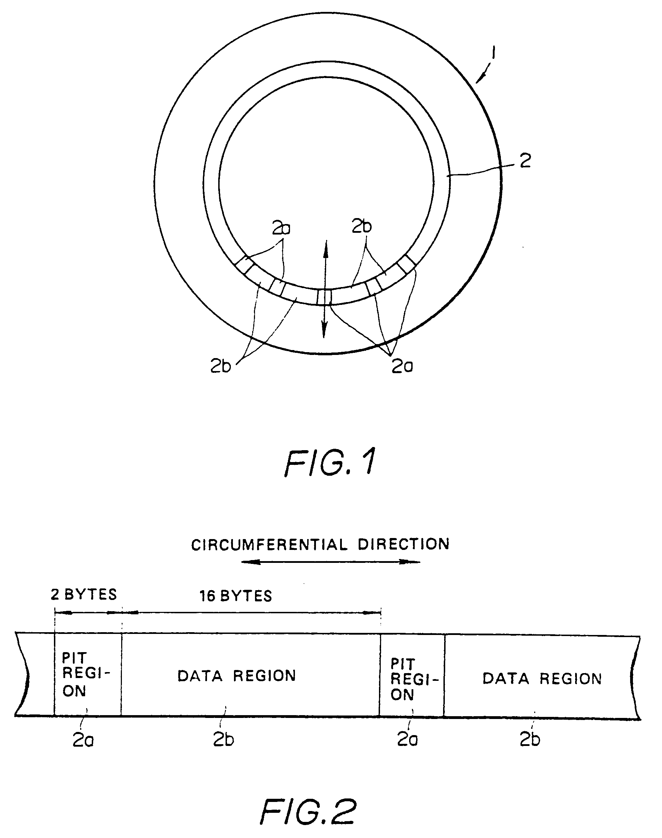

Referring to Figure 1, an opto-magnetic disc 1 has a diameter of, for example, about 13 cm, and a storage capacity of not less than 300 Mbytes on one side. The disc 1 is rotated with a constant angular velocity, and tracks 2 are formed concentrically at the rate of one track 2 per disc rotation for recording the data. About 18000 to 20000 tracks are formed on one side, with each track being divided into, for example, 32 sectors.

As shown enlarged in Figure 2, each track is composed of pit regions 2a having servo pits and data regions 2b in which data will be written, the regions 2a and 2b alternating along the circumferential direction of the disc 1. Each pit region 2a has a length of 2 bytes and each data region 2b has a length of 16 bytes.

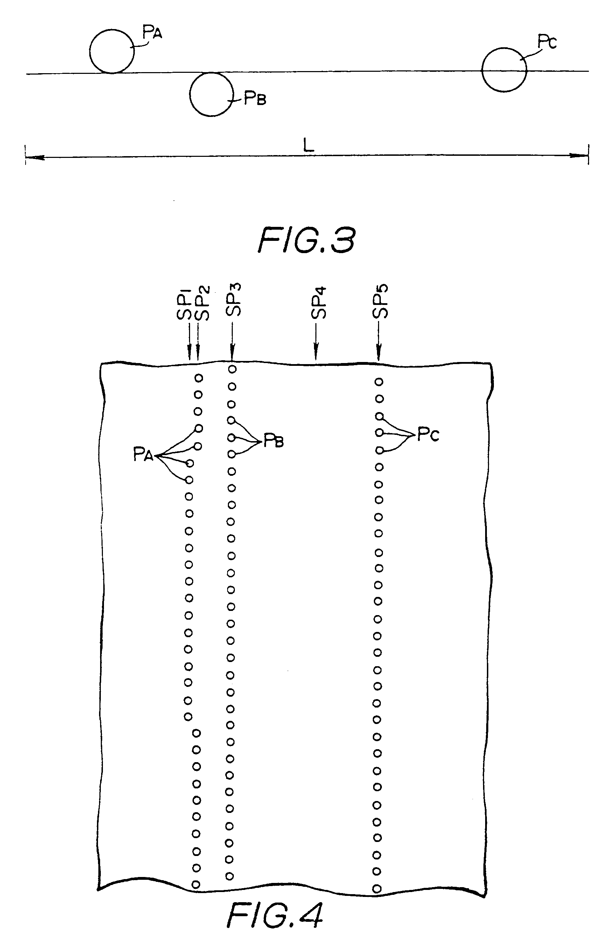

Three pits P_{A}, P_{B} and P_{C} are formed in each pit region 2a, as shown in Figure 3. The pits P_{A} and P_{B} are formed with offsets to respective sides of a centreline of the track, while the pit P_{C} is formed on the centreline. The pits P_{A}, P_{B} and P_{C} are about 0.5 to 1.0 x 10⁻⁶m in diameter, with the actual length L of the pit region 2a being 19 to 30 x 10⁻⁶m.

Figure 4 shows the disposition of the pits P_{A}, P_{B} and P_{C} along the radial direction of the disc 1 as indicated by the arrow in Figure 1. Thus the pits P_{B} and P_{C} are arranged in straight lines, whereas the pits P_{A} are offset lengthwise of the track in groups of 16 consecutive pits. This offset is utilized to effect traverse counting as later described, for the optical pick-up to find the track number of the track being scanned. The pits P_{A} are sampled by a sampling pulse SP₁ or a sampling pulse SP₂, and the pits P_{B} and P_{C} are sampled by the sampling pulses SP₃ and SP₅, respectively. The mirror surface regions between the pits P_{B} and P_{C} are sampled by sampling pulses SP₄ so as to be utilized for various servo control operations and clock generation as later described.

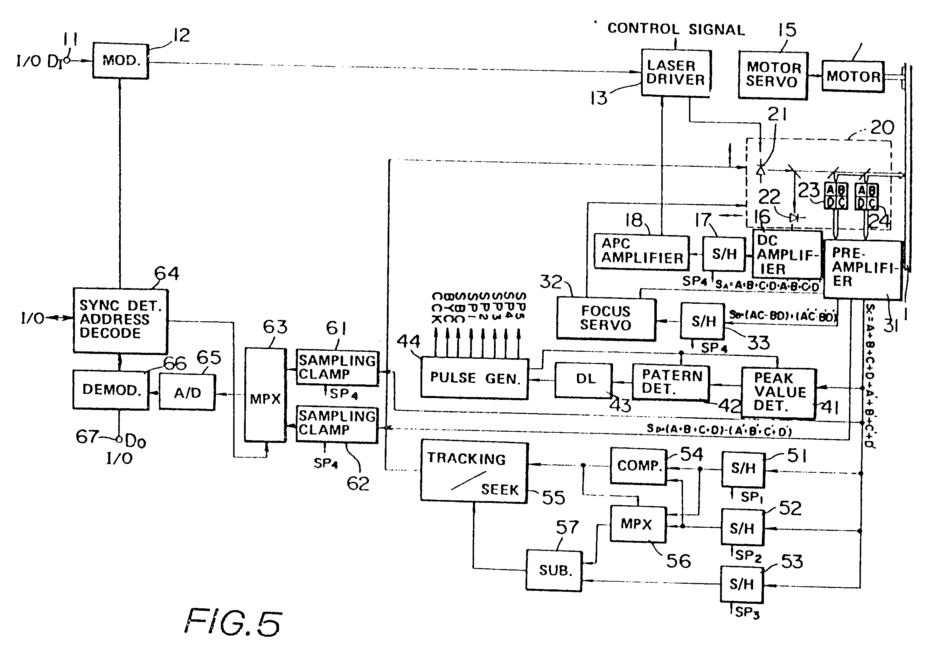

Referring to Figure 5, wherein the first embodiment is shown, data D₁ to be recorded are supplied to an input terminal 11 from, for example, a computer, through an interface (I/O). These data D₁ are supplied to a modulator 12 where they undergo modulation including bit conversion before being supplied to a laser drive circuit 13. Write, read or erasure mode control signals are supplied from the interface to the laser drive circuit 13 which, responsive to these control signals, operates to supply signals for driving a laser diode 21 of an optical pick-up 20, in order to supply drive pulse signals timed in accordance with channel clocks CCK to the laser diode 21 as the reference clocks during data recording and erasure, while also supplying high frequency drive signals to the laser diode 21 during data reading.

The optical pick-up 20 includes, in addition to the laser diode 21, a photodiode 22 and photodetectors 23 and 24, each divided into four sections. The photodiode 22 senses the intensity of the laser light emitted by the laser diode 21. The photodetectors 23 and 24 sense the laser light reflected by the disc 1, one of them sensing the positive direction component of the Kerr rotation angle and the other sensing its negative direction component.

An electric motor 14 is controlled by a motor servo circuit 15 by, for example, a phase locked loop (PLL) to cause the disc 1 to be rotated accurately at a prescribed velocity (angular velocity).

The laser light supplied from the laser diode 21 is irradiated on the disc 1, while being supplied to the photodiode 22. The output of the photodiode 22 proportional to the laser light intensity is supplied to a sample and hold (S/H) circuit 17 through a dc amplifier 16. The S/H circuit 17 performs a sample and hold operation in accordance with the sampling pulses SP₄ (Figure 4) and the output therefrom is supplied through an automatic power control (APC) amplifier 18 to the laser drive circuit 13 as APC signals. This causes the intensity of the laser light supplied from the laser diode 21 to be maintained at a prescribed value.

The laser light reflected by the disc 1 is supplied via a light detector, not shown, to the photodetectors 23 and 24, the output signals of which are supplied to a pre-amplifier 31. From the preamplifier 31, a light detecting signal S_{A} or the sum of the outputs from the respective light receiving regions of the photodetectors 23 and 24 (S_{A} = A+B+C+D + A′+B′+C′+D′) (including the dc components), is directly supplied to a focus servo circuit 32, and a light detection signal S_{B} composed of the outputs from the respective light receiving regions of the photodetectors 23 and 24 (SB = (AC-BD) + (A′C′-B′D′)) is also supplied to the focus servo circuit 32 through a S/H circuit 33 for performing the sample and hold operations in dependence upon the sampling pulses SP₄. Focus servo control signals produced in the focus servo circuit 32 on the basis of the respective signals S_{A} and S_{B} are supplied for focus control to the optical pick-up 20.

The light detection signal S_{C} from the pre-amplifier 31 (S_{C} = A+B+C+D + A′+B′+C′+D′) is supplied to a peak position detection circuit 41, S/H circuits 51, 52 and 53 and to a sampling clamp circuit 61. The light detecting signal S_{C} is the detection signal of patterns of projections and recesses in the pit region 2a of the disc 1. The peak position of the light detection signal S_{C} is detected in the peak position detection circuit 41, while the pit pattern having an interval corresponding to the interval between the pits P_{B} and P_{C} on the disc 1 is detected in a pattern detection circuit 42 to detect the pits P_{C}. The detected output is supplied via a delay circuit 43 to a pulse generator 44. Channel clocks CCK are generated in the pulse generator 44 as the reference clocks synchronized with the pits P_{C} on the basis of the detection output obtained in the pattern detecting circuit 42. In the pulse generator 44, byte clocks PYC, servo byte clocks SBC and sampling pulses SP₁, SP₂, SP₃, SP₄ and SP₅ are formed and outputted, as shown in Figure 4. Although not shown, the channel clocks CCK are supplied to all of the circuit blocks. The sample pulses SP₁, SP₂ and SP₃ are supplied to the S/H circuits 51, 52 and 53, respectively. The sampling pulses SP₄ are supplied to the S/H circuits 17 and 33, while also being supplied to the sampling clamp circuit 61 and a sampling clamp circuit 62. The sampling pulses SP₅ are used for detecting the moving direction, for example, of the optical pick-up 20. The peak position detection circuit 41 and the pattern detection circuit 42 are also supplied with gate pulses from the pulse generator 44.

In the S/H circuits, sample and hold operations are performed on the supplied light detection signal by the sampling pulses SP₁, SP₂ and SP₃. The signal levels of the outputs from the S/H circuits 51 and 52 are compared in a comparator 54. The comparator output is inverted every 16 tracks as the result of the radial disposition of the pits P_{A} on the disc 1, and is supplied as a traverse count signal to a tracking servo/seek circuit 55, while also being supplied to a multiplexer 56. From this multiplexer 56, the signal from the S/H circuit 51 or 52, whichever is higher in signal level, is selectively supplied to a subtracter 57. A difference signal between the signals from the multiplexer 56 and the S/H circuit 53 is formed and supplied therefrom as the tracking error signal to the tracking servo/seek circuit 55 which performs tracking and feed control operations for the optical pick-up 20.

The light detection signal S_{C} and a light detection signal S_{D} (S_{D} = (A+B+C+D) - (A′+B′+C′+D′)) are supplied from the pre-amplifier 31 to the sampling clamp circuits 61 and 62, respectively. The light detection signal S_{C} is the detection signal of patterns of projections and recesses in the pit region 2a of the disc 1. The light detection signal S_{D} is the detection signal of data written in the data region 2b of the disc 1. In the sampling clamp circuits 61 and 62, the respective signals are clamped by the sampling pulses SP₄ before being supplied to a multiplexer 63. The switching selecting operation of the multiplexer 63 is controlled by control signals from a sync detect/address decode circuit 64. Assuming that, for example, the light detection signal S_{C} is supplied by way of the sampling clamp circuit 61 and the multiplexer 63 to an analogue to digital (A/D) converter 65 so as to be converted into the digital value which is then supplied to a demodulator 66, the output from the demodulator 66 is supplied to the sync detect/address decode circuit 64 where the sync signals are detected and the address information is decoded. When the address information of the data supplied through an interface from a computer so as to be read coincides with the actual address, the multiplexer 63 is switched, so that the light detection signal S_{D} for the data region 2b is supplied to the A/D converter 65 and to the demodulator 66 to supply the data D₀ that have undergone demodulation including bit conversion from an output terminal 67. These data D₀ are supplied through an interface to a computer. During data writing, control signals are supplied from the sync detect/address decode circuit 64 to the modulating circuit 12 and, in accordance with these control signals, the data to be written are transmitted from the modulating circuit 12 to the laser drive circuit 13.

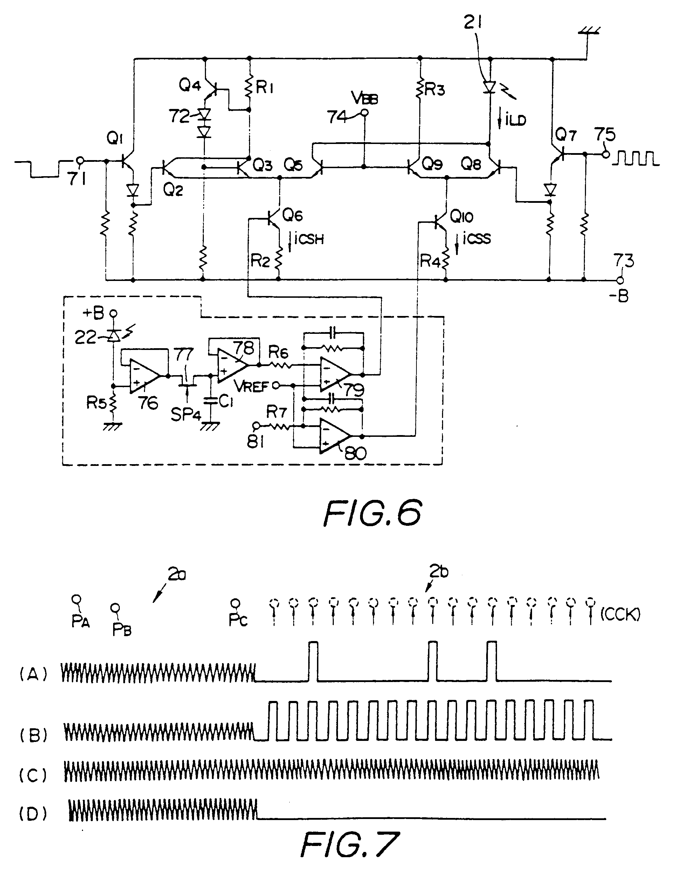

Figure 6 illustrates a typical construction of the drive control system for the laser diode 21. Control pulses indicating the read operation are supplied to a terminal 71, while control pulses indicating the write or erasure operations are supplied to a terminal 75.

The terminal 75 is connected via a transistor Q₁ to the base of a transistor Q₂. The transistor Q₂ is connected in a collector and emitter common configuration to a transistor Q₃. The collector of the transistor Q₃ is connected to a resistor R₁ and the base of a transistor Q₄. The emitter of the transistor Q₄ is connected via a diode 72 to the base of the transistor Q₃. The transistors Q₃ and Q₄ and the diode 72 form a ring oscillator. The transistors Q₃ and a transistor Q₅ have their emitters connected in common to the collector of a transistor Q₆ used as a current source, while the emitter of the transistor Q₆ is connected via a resistor R₂ to a power source terminal 73. The base of the transistor Q₅ is connected to a terminal 74 which supplies a prescribed base potential V_{BB}.

The terminal 75 is connected via a transistor Q₇ to the base of a transistor Q₈. The collector of the transistor Q8 is connected to the laser diode 21, while also being connected to the collector of the transistor Q₅. A transistor Q₉ has its collector grounded via a resistor R₃ and its base connected to the terminal 74. The transistors Q₈ and Q₉ have their emitters connected in common to the collector of a current source transistor Q₁₀, the emitter of which is connected via a resistor R₄ to the power source terminal 73.

The intensity of the laser light from the laser diode 21 is detected by the photodiode 22 which is connected to a resistor R₅ and to a switching element 77 through an operational amplifier 76 for dc amplification. The switching element 77 is connected to a capacitor C₁ and to an operational amplifier 78 acting as a high input impedance buffer. The switching element 77 is supplied with the sampling pulses SP₄ and performs a sampling operation of sampling the output of the photodiode 22 supplied via the operational amplifier 76, and holding the sampled output in the capacitor C₁. The output of the operational amplifier 78 is connected via a resistor R₆ to the inverting inputs of operational amplifiers 79 and 80. A reference voltage V_{ref} is supplied to each of the non-inverting inputs of the operational amplifiers 79 and 80, one output of which is connected to the base of the transistor Q₆ and the other output of which is connected to the base of the transistor Q₁₀. The inverting input of the operational amplifier 80 is connected via a resistor R₇ to a terminal 81 to which are supplied control signals for switching the output of the laser diode 21 between the write and erase modes.

In this drive control system for the laser diode 21, when the terminal 71 is at the low (L) level, the transistors Q₁ and Q₂ are kept in the OFF state, and the ring oscillator formed by the transistors Q₃ and Q₄ performs high frequency oscillation with a frequency of, for example, about 100 to 500 MHz. As a result, the laser diode 21 is supplied via the transistor Q₅ with a high frequency current i_{CSH} by the current source transistor Q₆ as the peak value, so as to be thereby driven into high frequency operation. With the terminal 71 at the high (H) level, the transistors Q₁ and Q₂ are kept in their ON state, so that the current i_{CSH} of the transistor Q₆ flows through the resistor R₁ via the transistor Q₂, while the driving of the laser diode 21 and the oscillation of the ring oscillator are terminated.

The driving of the laser diode 21 by the high frequency current of the laser diode 21 is achieved with the control pulses going low during the read out operation being supplied to the terminal 71.

With the terminal 75 at the L level, the transistors Q₇ and Q₈ are kept in their OFF state, with the current i_{CSS} of the current source transistor Q₁₀ not flowing through the laser diode 21 but flowing via the transistor Q₉ through the resistor R₃. With the terminal 75 at the H level, the respective transistors Q₇ and Q₈ are turned on, with the current i_{CSS} of the current source transistor Q₁₀ flowing via the transistor Q₈ through the laser diode 21. In this embodiment, during the write mode, for example, control pulses associated with data are supplied to the terminal 75 for driving the laser diode 21 with pulses in association with the data in order to effect data writing.

The operation of the drive control system of the laser diode 21 is explained more specifically by referring to Figure 7, wherein the waveform of the current i_{LD} supplied to the laser diode 21 is shown. Thus the current waveforms for the write, erase, read-out and stand-by modes are shown in Figures 7A, 7B, 7C and 7D, respectively.

In the write mode, the terminals 71 and 75 are kept at the L level during the period corresponding to the pit region 2a, so that, as shown in Figure 7A, the laser diode 21 is driven by the high frequency current. During the period corresponding to the data region 2b, the terminal 71 is kept at the H level, and the data pulses associated with the write data are supplied to the terminal 75 for driving the laser diode 21 with pulses to effect data writing. The write timing, that is, the timing of the data pulses, is coincident with the channel clocks CCK formed on the basis of the detection output of the pits P_{C}.

It is noted that, during the period corresponding to the pit region 2a, the laser diode 21 is necessarily driven by the high frequency current to effect the read operation even when the operating mode is other than the write mode.

With the erasure mode, the terminal 71 is kept at the H level during the period corresponding to the data region 2b and repetitive pulses are supplied to the terminal 75 for driving the laser diode 21 by pulses to effect data erasure, as shown in Figure 7B. The timing of the erasure operation, that is, that of the aforementioned repetitive pulses, is also coincident with that of the channel clocks CCK, such that the data recorded in the data region 2b are erased sequentially bit-by-bit.

With the read-out mode, both the terminals 71 and 75 are maintained at the L level during the periods corresponding to the pit region 2a and data region 2b, that is, the whole of the pulse period, the laser diode 21 thus being driven by the high frequency current as shown in Figure 7C to effect data reading.

In the stand-by mode, the terminal 75 is maintained at the L-level during the period corresponding to the data region 2b to stop driving of the laser diode 21, to perform only the reading of the pit region 2a.

In any of the aforementioned operating modes, the bases of the transistors Q₆ and Q₁₀ are controlled by automatic power control of the operation of the APC circuit system including the photodiode 22, to maintain a prescribed output (light intensity) of the laser diode 21. The control signal voltage applied to the terminal 81 is set to a value for the record mode different from that for the erase mode, so that a larger drive current will flow through the laser diode 21 during the erasure mode than during the record mode, to provide for more reliable erasure operation.

By driving the laser diode 21 by pulses during the data write and erasure modes, it becomes possible to extend the life of the laser diode 21 while achieving saving in power and reducing radio interference.

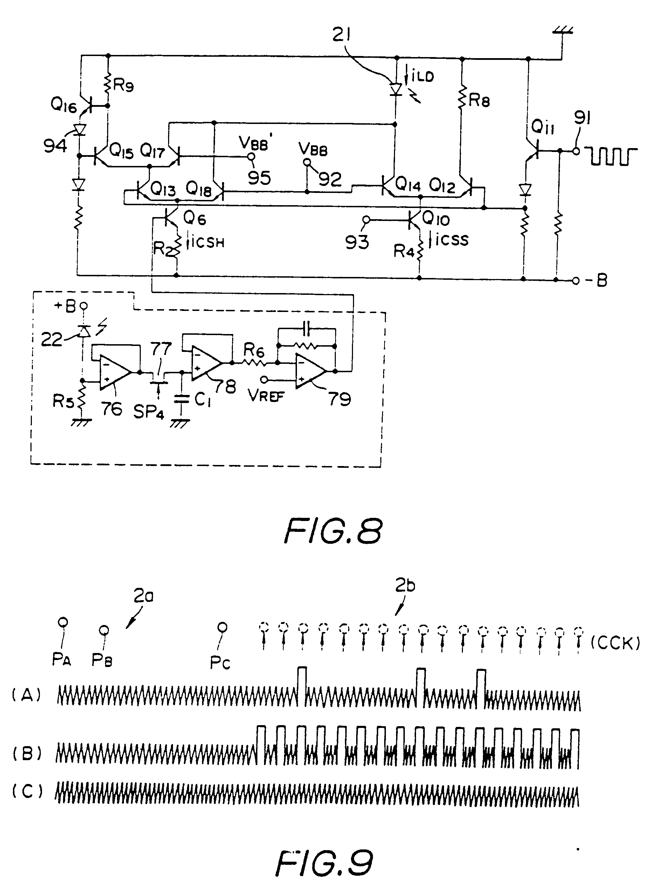

Figure 8 illustrates a modified drive control system for the laser diode 21. Parts corresponding to those shown in Figure 6 have the same reference numerals and the corresponding description is omitted.

A terminal 91 supplied with control pulses is connected via a transistor Q₁₁ to bases of transistors Q₁₂ and Q₁₃, while the collector of the transistor Q₁₂ is grounded via a resistor R₈. A transistor Q₁₄ has its collector connected to the laser diode 21 and its base connected to a terminal 92 supplied with a predetermined base voltage V_{BB}. The emitters of the transistors Q₁₂ and Q₁₄ are connected in common to the collector of a current source transistor Q₁₀. The base of the transistor Q₁₀ is connected to a terminal 93 supplied with a control signal whereby the drive current caused to flow through the laser diode 21 is switched between the record and erasure modes.

The collector of a transistor Q₁₅ is connected to a resistor R₉ and to the base of a transistor Q₁₆. The emitter of the transistor Q₁₆ is connected via a diode 94 to the base of the transistor Q₁₅. The transistors Q₁₅ and Q₁₆ and the diode 94 form a ring oscillator. A transistor Q₁₇ has its collector connected to the laser diode 21 and its base connected to a terminal 95 supplying a prescribed base voltage V_{BB′}. The transistors Q₁₅ and Q₁₇ have their emitters connected in common to the collector of the transistor Q₁₃. A transistor Q₁₈ has its collector connected to the laser diode 21 and its base to the terminal 92. The transistor Q₁₃ and Q₁₈ have their emitters connected in common to the collector of the current source transistor Q₆.

The operation is as follows.

With the terminal 91 at the L level, the transistors Q₁₁, Q₁₂ and Q₁₃ are turned off, while the transistors Q₁₄ and Q₁₅ are turned on. Therefore, the current i_{CSS} flowing through the transistor Q₁₄ and the current i_{CSH} flowing through the transistor Q₁₈ are supplied to the laser diode 21. Thus the drive current (i_{CSS} + i_{CSH}) is supplied to the laser diode 21, such that automatic power control is caused to occur both with the write and erasure modes by the APC signals supplied from the APC circuit system to the base of the transistor Q₆.

With the terminal 91 at the H level, the transistors Q₁₁, Q₁₂ and Q₁₃ are turned on, while the transistors Q₁₄ and Q₁₈ are turned off. The transistors Q₁₅ and Q₁₆ act as a ring oscillator to perform a high frequency oscillation. As a result, a high frequency current i_{CSH} of the current source transistor Q₆ as the peak value is applied via transistors Q₁₃ and Q₁₇ to the laser diode 21, which is thereby driven into high frequency operation. The current of the transistor Q₁₀ flows to the resistor R₈ via transistor Q₁₂.

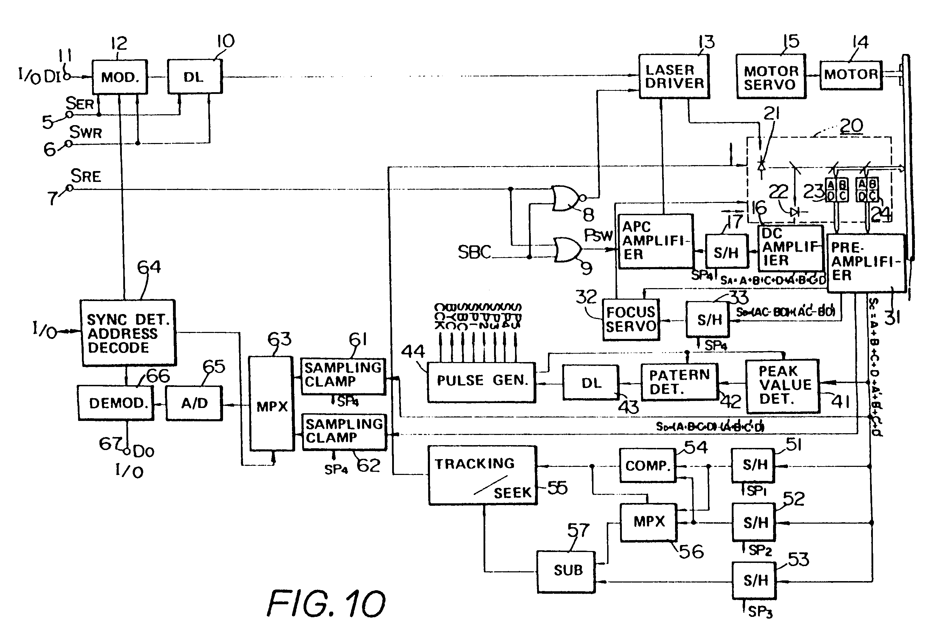

The operation will be explained more specifically by referring to Figure 9, wherein the waveform of the current i_{LD} supplied to the laser diode 21 is shown. The current waveforms during the write, erase and read-out modes are shown in Figures 9A, 9B and 9C, respectively.

During the write mode, data pulses associated with the write data are supplied to the terminal 91 during the periods corresponding to the data region 2b, so that the laser diode 21 id driven by pulses, as shown in Figure 9A, to effect data writing in the data region 2b. During the time interval devoid of data pulses, with the terminal 91 at the H level, the transistors Q₁₅ and Q₁₆ act as a ring oscillator to drive the laser diode 21 with high frequency current. This high frequency driving affords a so-called pre-heating for the actual data write operation for assuring a smooth writing operation.

In the erasure mode operation, as shown in Figure 9B, the laser diode 21 is driven at high frequency, at the same time that the erasure pulses having the prescribed repetition rate are supplied to the terminal 91 during the time period corresponding to the data region 2b, so that the laser diode 21 is driven by pulses to effect erasure of the data region 2b.

In the read-out mode, the terminal 91 is maintained at the H level, so that, as shown in Figure 9C, the laser diode 21 is driven by the high frequency current to effect data reading. By reading the data in this manner with the laser diode 21 driven by high frequency current, it becomes possible to prevent noise due to the return beam of the laser light irradiated on the disc 1, while extending the life of the laser diode 21.

It is noted that, in the drive control system of Figure 6, operation similar to that of Figure 9 may be obtained when the bases of the transistors Q₂ and Q₃ are connected to each other for supplying one-input control pulses.

Figure 10 shows a modified embodiment of the opto-magnetic disc apparatus of Figure 5. The apparatus shown herein includes control input terminals 5, 6 and 7 supplied with an erasure mode signal S_{ER}, a write mode signal S_{WR} and a read mode signal S_{RE} through an interface, respectively. The erasure mode signal S_{ER} and the write mode signal S_{WR} are supplied to the modulator 12, and the read mode signals are supplied from the control input terminal 7 through a NOR gate 8 to the laser drive circuit 13 while also being supplied via an OR gate 9 to the APC amplifier 18. A delay compensation circuit 10 is provided between the modulator 12 and the laser drive circuit 13, and the erasure mode signal S_{ER} and write mode signal S_{WR} are also supplied to the delay compensation circuit 10 from the control input terminals 5 and 6, respectively.

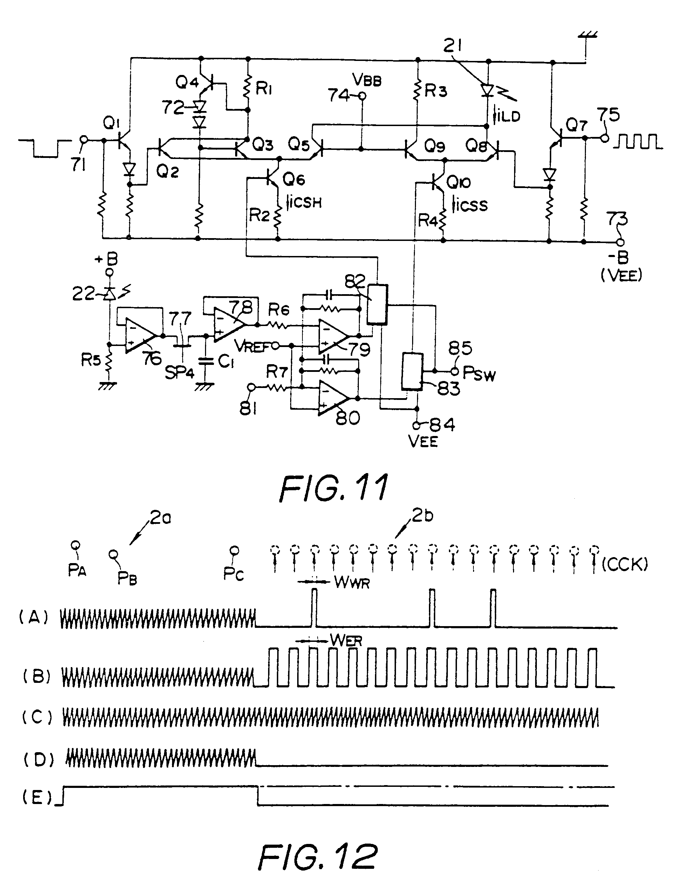

This laser drive control system formed by the aforementioned laser drive circuit 13 and the APC amplifier 18 is shown more specifically in Figure 11, wherein the output terminal of the operational amplifier 79 in the driven control system shown in Figure 6 is connected via a switching circuit 82 to the base of the transistor Q₆, while the output terminal of the operational amplifier 80 is connected via a switching circuit 83 to the base of the transistor Q₁₀. The switching circuits 82 and 83 are connected to a terminal 84 which supplies a prescribed voltage, herein a voltage V_{EE} equal to the voltage supplied to the power source terminal 73. The switching circuits 82 and 83 are controlled and switched by a switching pulse P_{SW} supplied to a terminal 85 from the OR gate 9. With the switching pulse P_{SW} at the H level, the outputs of the operational amplifiers 79 and 80 are supplied to the bases of the transistors Q₆ and Q₁₀ and, with the switching pulse P_{SW} at the L level, the voltage V_{EE} at the terminal 84 is supplied to the bases of the transistors Q₆ and Q₁₀.

In this embodiment, the operation of the modulator 12 and the delay compensation circuit 10 is switched by the erasure mode signals S_{ER} and the write mode signals S_{WR} supplied to the control input terminals 5 and 6, such that, responsive to the data D₁ supplied to the input terminal 11 during the write operating mode, data pulses timed with the channel clocks CCK are supplied from the modulator 12 via the delay compensation circuit 10 to the terminal 75 of the laser drive circuit 13, whereby, as shown in Figure 12A, the laser diode 21 is driven by pulses to write data on the data region 2b of the disc 1. With the erasure mode operation, erasure pulses timed with the channel clocks CCK are supplied from the modulator 12 via the delay compensation circuit 10 to the terminal 75 of the laser drive circuit 13, whereby, as shown in Figure 12B, the laser diode 21 is driven by pulses to effect data erasure. For more reliable erasure, the delay compensation circuit 10 operates to provide the erasure pulses for the erasure mode having a larger pulse width W_{ER} than the pulse width W_{WR} of the write pulse for the write mode.

During the read mode, the terminals 71 and 75 are maintained at the L level during the period corresponding to the pit region 2a and the data region 2b, that is, the totality of the pulse period, for high frequency driving of the laser diode 21 to read out data, as shown in Figure 12C.

During the stand-by mode, the terminal 75 is maintained at the L level during the period corresponding to the data region 2b, as shown in Figure 12D, to stop the driving of the laser diode 21, to perform only reading of the pit region 2a.

In this drive control system, the switching pulse P_{SW} shown in Figure 12E, that is, the pulse going high during the driving period of the laser diode 21 corresponding to the pit region 2a and going low during the non-drive period of the laser diode 21 corresponding to the data region 2b, is supplied from the pulse generator 44 via the OR gate 9 to the terminal 85. In this manner, during the drive period of the laser diode 21, the output of the operational amplifier 79 is supplied to the base of the transistor Q₆ to effect the automatic power control by the APC circuit including the photodiode 22, to provide the constant output or light intensity of the laser diode 21. During the non-drive period, the voltage V_{EE} at the terminal 84 is supplied to the bases of the transistors Q₆ and Q₁₀, so that they are turned off to prevent the current from flowing through the resistors R₁ and R₃. When the current is prevented in this manner from flowing through the resistors R₁ and R₃ during the non-drive period, power consumption can be reduced to about 1/9 that when using the drive control system shown in Figure 6, so that degradation of the circuit elements due to heat generation is also prevented.

Although the foregoing description is applied to the apparatus employing an opto-magnetic disc, it is applicable to other erasable optical discs.

## Claims

1. An optical disc recording and reproducing apparatus comprising:
a disc drive means (14) for rotating an optical disc (1) at a constant angular velocity;
said disc (1) including pit regions (2a) having servo pits and data regions (2b) in which data will be recorded, said pit and data regions (2a, 2b) being alternately provided along the circumferential direction of said disc (1);
an optical head (20) including a laser diode (21) for emitting laser light irradiating said disc (1);
synchronizing means for controlling reading and writing, said synchronizing means comprising pulse generating means (44) for forming reference clock pulses synchronized with said servo pits in said disc (1), said pulse generating means (44) being connected (31, 41, 42, 43) to said optical head (20) and responsive to an output therefrom obtained by detecting said servo pits; and
means (13) for supplying drive pulses to said laser diode (21) in synchronism with said reference clock pulses, whereby said laser diode (21) is driven to write data onto said data regions (2b) in synchronism with said reference clock pulses;
characterized in that:
said synchronizing means further controls erasing;
said means (13) for supplying drive pulses to said laser diode (21) further drives said laser diode (21) to erase data from said data regions (2b) in synchronism with said reference clock pulses;
said means (13) for supplying drive pulses includes means causing a relatively small current to flow through said laser diode (21) during the intervals between said drive pulses effecting data erasure or data writing; and
data are recorded in said data regions (2b) by drive pulses synchronized with said reference clock pulses at the rate of one bit of data per pulse, with data being erased from said data regions (2b) on a bit-by-bit basis.

2. Apparatus according to claim 1 wherein said relatively small current is supplied to said means (13) for supplying drive pulses in the form of high frequency current.

3. Apparatus according to claim 2 including reading means (61 to 67), connected to said optical head (20) for reading out data from said disc (1), for driving said laser diode (21) with said high frequency current during operation of said reading means (61 to 67), whereby data recorded on said disc (1) are read-out in response to the laser output of said laser diode (21).

4. Apparatus according to claim 1 including an automatic power control circuit provided in said means (13) for supplying drive pulses, for controlling the output level of said laser diode (21) at a constant level by power control signals formed by sampling and holding said output level in response to said reference clock pulses.

5. Apparatus according to claim 4 wherein said automatic power control circuit includes switching means for interrupting the operating current of said means (13) for supplying drive pulses during periods when the data are not being written to or read or erased from said disc (1).

6. An optical disc recording and reproducing apparatus comprising:
a disc drive means (14) for rotating an optical disc (1) at a constant angular velocity;
said disc (1) including pit regions (2a) having servo pits and data regions (2b) in which data will be recorded, said pit and data regions (2a, 2b) being alternately provided along the circumferential direction of said disc (1);
an optical head (20) including a laser diode (21) for emitting laser light irradiating said disc (1);
synchronizing means for controlling reading and writing, said synchronizing means comprising pulse generating means (44) for forming reference clock pulses synchronized with said servo pits in said disc (1), said pulse generating means (44) being connected (31, 41, 42, 43) to said optical head (20) and responsive to an output therefrom obtained by detecting said servo pits; and
means (13) for supplying drive pulses to said laser diode (21) in synchronism with said reference clock pulses, whereby said laser diode (21) is driven by drive pulses of a first pulse width (W_{WR}) to write data onto said data regions (2b) in synchronism with said reference clock pulses;
characterized in that:
said synchronizing means further controls erasing;
said means (13) for supplying drive pulses to said laser diode (21) further drives said laser diode (21) with drive pulses of a second pulse width (W_{ER}) to erase data from said data regions (2b) in synchronism with said reference clock pulses, said second pulse width (W_{ER}) being greater than said first pulse width (W_{WR}); and
data are recorded in said data regions (2b) by said drive pulses of said first pulse width (W_{WR}) synchronised with said reference clock pulses at the rate of one bit of data per pulse, with data being erased from said data regions (2b) on a bit-by-bit basis.

## Patentansprüche

1. Optische Plattenaufzeichnungs- und -Wiedergabevorrichtung mit:
einem Plattenantriebsmittel (14) zum Antreiben einer optischen Platte (1) mit einer konstanten Winkelgeschwindigkeit;
wobei die Platte (1) Pitbereiche (2a) hat, die Servopits haben, und Datenbereiche (2b), in den Daten aufgezeichnet werden, wobei die Pit- und Datenbereiche (2a, 2b) abwechselnd entlang der Umfangsrichtung der Platte (1) vorgesehen sind;
einem optischen Kopf (20) mit einer Laserdiode (21) zum Aussenden von Laserlicht, das die Platte (1) bestrahlt;
Synchronisationsmitteln zum Steuern des Lesens und des Schreibens, wobei die Synchronisationsmittel Impulserzeugungsmittel (44) zur Bildung von Referenztaktimpulsen aufweisen, die mit den Servopits in der Platte (1) synchronisiert sind, wobei die Impulserzeugungsmittel (44) mit dem optischen Kopf (20) verbunden (31, 41, 42, 43) sind und auf ein Ausgangssignal davon reagieren, das durch ein Ermitteln der Servopits erhalten wurde; und
Mitteln (13) zur Lieferung von Antriebsimpulsen zur Laserdiode (21) synchron mit den Referenztaktimpulsen, wodurch die Laserdiode (21) angetrieben wird, um Daten auf die Datenbereiche (2b) synchron mit den Referenztaktimpulsen zu schreiben;
dadurch gekennzeichnet, daß
die Synchronisationsmittel weiter das Löschen steuern;
die Mittel (13) zum Liefern von Antriebsimpulsen zur Laserdiode (21) weiter die Laserdiode (21) antreiben, um Daten aus den Datenbereichen (2b) synchron mit den Referenztaktimpulsen zu löschen;
die Mittel (13) zum Liefern von Antriebsimpulsen Mittel aufweisen, die einen relativ kleinen Strom verursachen, der durch die Laserdiode (21) während der Intervalle zwischen den Antriebsimpulsen fließen soll, um eine Löschung von Daten oder Schreiben von Daten auszuführen; und
Daten in den Datenbereichen (2b) durch Antriebsimpulse aufgezeichnet werden, die mit den Referenztaktimpulsen mit einer Rate von einem Datenbit pro Impuls synchronisiert sind, wobei Daten aus den Datenbereichen (2b) auf einer Bit-um-Bit-Basis gelöscht werden.

2. Vorrichtung nach Anspruch 1, wobei der relativ kleine Strom zu den Mitteln (13) zur Lieferung von Antriebsimpulsen in der Form eines Hochfrequenzstroms geliefert wird.

3. Vorrichtung nach Anspruch 2, mit Lesemitteln (61 bis 67), die mit dem optischen Kopf (20) zum Lesen von Daten aus der Platte (1) verbunden sind, um die Laserdiode (21) mit dem Hochfrequenzstrom während einer Arbeit der Lesemittel (61 bis 67) anzutreiben, wodurch Daten, die auf der Platte (1) aufgezeichnet sind, abhängig vom Laserausgangssignal der Laserdiode (21) gelesen werden.

4. Vorrichtung nach Anspruch 1, mit einer automatischen Leistungssteuerschaltung, die in den Mitteln (13) zum Liefern von Antriebsimpulsen vorgesehen ist, zum Steuern des Ausgangspegels der Laserdiode (21) bei einem konstanten Pegel durch Leistungssteuersignale, die durch Abtasten und Halten dieses Ausgangspegels abhängig von den Referenztaktimpulsen gebildet werden.

5. Vorrichtung nach Anspruch 4, die automatische Leistungssteuerschaltung Schaltmittel zum Unterbrechen des Betriebsstroms der Mittel (13) aufweist, um Antriebsimpulse während Perioden zu liefern, wenn die Daten nicht in die Platte (1) geschrieben oder daraus gelesen oder gelöscht werden.

6. Optische Plattenaufzeichnungs- und -Wiedergabevorrichtung mit:
einem Plattenantriebsmittel (14) zum Antreiben einer optischen Platte (1) mit einer konstanten Winkelgeschwindigkeit;
wobei die Platte (1) Pitbereiche (2a) hat, die Servopits haben, und Datenbereiche (2b), in denen Daten aufgezeichnet werden, hat, wobei die Pit- und Datenbereiche (2a, 2b) abwechselnd entlang der Umfangsrichtung der Platte (1) vorgesehen sind;
einem optischen Kopf (20) mit einer Laserdiode (21) zum Aussenden von Laserlicht, das die Platte (1) bestrahlt;
Synchronisationsmitteln zum Steuern des Lesens und des Schreibens, wobei die Synchronisationsmittel Impulserzeugungsmittel (44) zur Bildung von Referenztaktimpulsen aufweisen, die mit den Servopits in der Platte (1) synchronisiert sind, wobei die Impulserzeugungsmittel (44) mit dem optischen Kopf (20) verbunden (31, 41, 42, 43) sind und auf ein Ausgangssignal davon reagieren, das durch ein Ermitteln der Servopits erhalten wurde; und
Mitteln (13) zur Lieferung von Antriebsimpulsen zur Laserdiode (21) synchron mit den Referenztaktimpulsen, wodurch die Laserdiode (21) durch Antriebsimpulse einer ersten Impulsbreite (W_{WR}) angetrieben wird, um Daten auf die Datenbereiche (2b) synchron mit den Referenztaktimpulsen zu schreiben;
dadurch gekennzeichnet, daß
die Synchronisationsmittel weiter das Löschen steuern;
die Mittel (13) zum Liefern von Antriebsimpulsen zur Laserdiode (21) weiter die Laserdiode (21) mit Antriebsimpulsen einer zweiten Impulsbreite (W_{ER}) antreiben, um Daten aus den Datenbereichen (2b) synchron mit den Referenztaktimpulsen zu löschen, wobei die zweite Impulsbreite (W_{ER}) größer als die erste Impulsbreite (W_{WR}) ist; und
Daten in den Datenbereichen (2b) durch die Antriebsimpulse der ersten Impulsbreite (W_{WR}) aufgezeichnet werden, die mit den Referenztaktimpulsen mit einer Rate von einem Datenbit pro Impuls synchronisiert sind, wobei Daten aus den Datenbereichen (2b) auf einer Bit-um-Bit-Basis gelöscht werden.

## Revendications

1. Appareil d'enregistrement et de reproduction à disque optique comprenant :
un moyen d'entraînement de disque (14) pour faire tourner un disque optique (1) à une vitesse angulaire constante ;
ledit disque (1) comprenant des régions de microcuvettes (2a) comportant des microcuvettes d'asservissement et des régions de données (2b) dans lesquelles des données seront enregistrées, lesdites régions de microcuvettes et de données (2a, 2b) étant disposées de manière alternée suivant la direction circonférentielle dudit disque (1) ;
une tête optique (20) comprenant une diode laser (21) pour émettre de la lumière de laser éclairant ledit disque (1) ;
un moyen de synchronisation pour commander la lecture et l'écriture, ledit moyen de synchronisation comprenant un moyen générateur d'impulsions (44) pour former des impulsions d'horloge de référence synchronisées avec lesdits microcuvettes d'asservissement dans ledit disque (1), ledit moyen générateur d'impulsions (44) étant connecté (31, 41, 42, 43) à ladite tête optique (20) et étant sensible à une sortie de celle-ci obtenue par la détection desdites microcuvettes d'asservissement ; et
un moyen (13) pour délivrer des impulsions d'attaque à ladite diode laser (21) en synchronisme avec lesdites impulsions d'horloge de référence, ce par quoi, ladite diode laser (21) est attaquée pour écrire des données sur lesdites régions de données (2b) en synchronisme avec lesdites impulsions d'horloge de référence ;
caractérisé :
en ce que ledit moyen de synchronisation commande en outre l'effacement ;
en ce que ledit moyen (13) pour délivrer des impulsions d'attaque à ladite diode laser (21) attaque en outre ladite diode laser (21) pour effacer des données dans lesdites régions de données (2b) en synchronisme avec lesdites impulsions d'horloge de référence ;
en ce que ledit moyen (13) pour délivrer des impulsions d'attaque comprend un moyen faisant qu'un courant relativement faible s'écoule dans ladite diode laser (21) pendant les intervalles entre lesdites impulsions d'attaque effectuant l'effacement de données ou l'écriture de données ; et,
en ce que des données sont enregistrées dans lesdites régions de données (2b) par des impulsions d'attaque synchronisées avec lesdites impulsions d'horloge de référence à la cadence d'un bit de donnée par impulsion, les données étant effacées desdites régions de données (2b) sur une base bit par bit.

2. Appareil selon la revendication 1, dans lequel ledit courant relativement faible est délivré audit moyen (13) pour délivrer des impulsions d'attaque sous la forme de courant à haute fréquence.

3. Appareil selon la revendication 2, incluant un moyen de lecture (61 à 67), connecté à ladite tête optique (20) pour lire des données sur ledit disque (1), pour attaquer ladite diode laser (21) avec ledit courant à haute fréquence pendant le fonctionnement dudit moyen de lecture (61 à 67), ce par quoi des données enregistrées sur ledit disque (1) sont lues en réponse à la sortie de laser de ladite diode laser (21).

4. Appareil selon la revendication 1, incluant un circuit de commande automatique de puissance disposé dans ledit moyen (13) pour délivrer des impulsions d'attaque, pour commander le niveau de sortie de ladite diode laser (21) à un niveau constant, par des signaux de commande de puissance formés en échantillonnant et en maintenant ledit niveau de sortie en réponse auxdites impulsions d'horloge de référence.

5. Appareil selon la revendication 4, dans lequel ledit circuit de commande automatique de puissance comprend un moyen de commutation pour interrompre le courant de mise en oeuvre dudit moyen (13) pour délivrer des impulsions d'attaque, pendant les périodes où les données ne sont ni en cours d'écriture ni de lecture ni d'effacement sur ledit disque (1).

6. Appareil d'enregistrement et de reproduction à disque optique comprenant :
un moyen d'entraînement de disque (14) pour faire tourner un disque optique (1) à une vitesse angulaire constante ;
ledit disque (1) comprenant des régions de microcuvettes (2a) comportant des microcuvettes d'asservissement et des régions de données (2b) dans lesquelles des données seront enregistrées, lesdites régions de microcuvettes et de données (2a, 2b) étant disposées de manière alternée suivant la direction circonférentielle dudit disque (1) ;
une tête optique (20) comprenant une diode laser (21) pour émettre de la lumière de laser éclairant ledit disque (1) ;
un moyen de synchronisation pour commander la lecture et l'écriture, ledit moyen de synchronisation comprenant un moyen générateur d'impulsions (44) pour former des impulsions d'horloge de référence synchronisées avec lesdits microcuvettes d'asservissement dans ledit disque (1), ledit moyen générateur d'impulsions (44) étant connecté (31, 41, 42, 43) à ladite tête optique (20) et étant sensible à une sortie de celle-ci obtenue par la détection desdites microcuvettes d'asservissement ; et
un moyen (13) pour délivrer des impulsions d'attaque à ladite diode laser (21) en synchronisme avec lesdites impulsions d'horloge de référence, ce par quoi, ladite diode laser (21) est attaquée par des impulsions d'attaque d'une première largeur d'impulsion (W_{WR}) pour écrire des données sur lesdites régions de données (2b) en synchronisme avec lesdites impulsions d'horloge de référence ;
caractérisé :
en ce que ledit moyen de synchronisation commande en outre l'effacement ;
en ce que ledit moyen (13) pour délivrer des impulsions d'attaque à ladite diode laser (21) attaque en outre ladite diode laser avec des impulsions d'attaque d'une seconde largeur d'impulsion (W_{ER}) pour effacer des données dans lesdites régions de données (2b) en synchronisme avec lesdites impulsions d'horloge de référence, ladite seconde largeur d'impulsion (W_{ER}) étant plus grande que ladite première largeur d'impulsion (W_{WR}) ; et
en ce que des données sont enregistrées dans lesdites régions de données (2b) par des impulsions d'attaque de ladite première largeur d'impulsion (W_{WR}) synchronisées avec lesdites impulsions d'horloge de référence à la cadence d'un bit de donnée par impulsion, les données étant effacées desdites régions de données (2b) sur une base bit par bit.
